# EUROPÄISCHE PATENTANMELDUNG

(11) **EP 2 629 076 A1**
(43) Veröffentlichungstag der Anmeldung: **21.08.2013**
(21) Anmeldenummer: 12001054.1
(22) Anmeldetag: 17.02.2012
(51) Int. Cl.: G01M 3/28, F17D 5/02

(54) **Vorrichtung und Verfahren zur Erkennung eines Wasserschadens**

(71) Anmelder: Stelljes, Rüdiger, 22457 Hamburg (DE)
(72) Erfinder: Stelljes, Rüdiger, 22457 Hamburg (DE)
(74) Vertreter: Hauck Patent- und Rechtsanwälte

(57) **Zusammenfassung**

Verfahren zur Erkennung eines Wasserschadens mit den folgenden Schritten:
● Erfassen einer Verbrauchsanzeige eines Wasserzählers mit einem optischen Sensor,
● Auswerten von Veränderungen eines von dem optischen Sensor übermittelten Signals,
● Anzeigen eines Wasserschadens, falls die Veränderungen ein vorgegebenes Wasserschadenkriterium erfüllen.

## Beschreibung

Die Erfindung betrifft ein Verfahren und eine Vorrichtung zur Erkennung eines Wasserschadens, bei denen durch Auswertung von Informationen eines Wasserzählers auf einen möglichen Wasserschaden geschlossen und gegebenenfalls ein Wasserschaden angezeigt wird.

Wasserschäden entstehen durch Beschädigungen von Wasserleitungen oder daran angeschlossenen Geräten. Dabei können nicht nur Leitungsbrüche, bei denen in sehr kurzer Zeit große Wassermengen austreten, sondern auch kleinere Undichtigkeiten, die häufig lange unbemerkt bleiben, große Schäden anrichten. In Mitleidenschaft gezogen werden nicht nur Einrichtungsgegenstände, sondern auch die Bausubstanz, so dass teure Sanierungsmaßnahmen notwendig werden können.

Um Wasserschäden vorzubeugen oder die Höhe eines entstehenden Schadens zu begrenzen, sind unterschiedliche Vorgehensweisen bekannt geworden. Die Druckschrift DE 296 04 110 U1 schlägt vor, in der Nähe von Wasserverbrauchern Feuchtigkeitssensoren im Bodenbereich anzuordnen. Erfassen diese Sensoren Feuchtigkeit, wird ein zentral angeordnetes Absperrventil geschlossen, so dass ein weiterer Wasseraustritt verhindert wird.

Aus der Druckschrift US 2012/0026004 A1 ist ein Verfahren bekannt geworden, bei dem eine zentrale Steuerung auf elektronischem Wege mit einem Wasserzähler kommuniziert. Dabei überträgt der Wasserzähler Zählerstände an die zentrale Steuerung. Es erfolgt eine Auswertung des Wasserverbrauchs in einem bestimmten Zeitraum. Liegt der Wasserverbrauch über einer vorgegebenen Schwelle, wird ein Wasserschaden erkannt. In diesem Fall wird ein Benutzer benachrichtigt, beispielsweise über ein Mobiltelefon oder durch Versenden einer E-Mail.

Unabhängig von einer Erkennung von Wasserschäden ist außerdem bekannt geworden, Zählerstände durch Anfertigen eines Bildes der Verbrauchsanzeige abzulesen oder zu dokumentieren. Dabei werden die Bilddaten einer automatischen Texterkennung zugeführt, die die Ziffern der Verbrauchsanzeige rekonstruiert und so den Zählerstand in elektronischer Form verfügbar macht. Dies ist beispielsweise in den Druckschriften DE 101 40 792 A1 und DE 100 05 213 A1 beschrieben.

Davon ausgehend ist es die Aufgabe der Erfindung, ein Verfahren zur Erkennung eines Wasserschadens zur Verfügung zu stellen, das besonders einfach und in Verbindung mit einem herkömmlichen Wasserzähler ausgeführt werden kann, sowie eine für dieses Verfahren verwendbare Vorrichtung.

Diese Aufgabe wird gelöst durch das Verfahren mit den Merkmalen des Anspruchs 1. Vorteilhafte Ausgestaltungen des Verfahrens sind in den sich anschließenden Unteransprüchen angegeben.

Das Verfahren dient zur Erkennung eines Wasserschadens und weist die folgenden Schritte auf:
● Erfassen einer Verbrauchsanzeige eines Wasserzählers mit einem optischen Sensor,
● Auswerten von Veränderungen eines von dem optischen Sensor übermittelten Signals,
● Anzeigen eines Wasserschadens, falls die Veränderungen ein vorgegebenes Wasserschadenkriterium erfüllen.

Mit dem Begriff "Wasserschaden" ist hier nicht nur ein im versicherungsrechtlichen Sinn relevanter Wasserschaden, also ein bestimmungswidriger Austritt von Leitungs wasser, der einen Folgeschaden nach sich zieht, gemeint, sondern allgemein jede Art eines unerwünschten Wasserverlusts. Beispielsweise kann mit dem Verfahren auch erkannt werden, wenn ein Benutzer zum Beispiel nach dem Zähneputzen den Wasserhahn nicht oder nicht vollständig geschlossen hat, so dass weiterhin Wasser austritt und im Ablauf des Waschbeckens verschwindet, ohne dass hierdurch ein Wasserschaden im engeren Sinne entsteht.

Bei dem Verfahren kann ein beliebiger, herkömmlicher Wasserzähler verwendet werden, der eine Verbrauchsanzeige aufweist. Der Wasserzähler ist in einer Versorgungsleitung angeordnet und misst den Wasserverbrauch. Derartige Wasserzähler befinden sich zu Abrechnungszwecken mit einem Wasserversorgungsunternehmen in der Regel an jeder Verbrauchsstelle. Bei der Versorgungsleitung kann sich um eine Kaltwasser- oder um eine Heißwasserleitung handeln. Insbesondere kann ein Wasserzähler, der in einer Wohnung oder in einem Haus an einem zentralen Kaltwasserzugang angeordnet ist, verwendet werden. In diesem Fall zeigt der Wasserzähler jedweden Verbrauch in dem betreffenden Haushalt an, egal ob Kaltwasser oder Heißwasser entnommen wird. Dadurch wird eine besonders umfassende Erkennung von Wasserschäden erreicht.

Die Verbrauchsanzeige des Wasserzählers kann eine Reihe von Ziffern oder Zeigern aufweisen, welche mehrere Dezimalstellen des Zählerstands anzeigen. So kann der aktuelle Zählerstand beispielsweise in den Einheiten Kubikmeter und Liter unmittelbar abgelesen werden. Die Ziffern können von einem analogen Zählwerk oder in digitaler Form, beispielsweise mit einer LCD-Anzeige, dargestellt werden.

Die Verbrauchsanzeige wird mit einem optischen Sensor erfasst. Dabei ist es zunächst gleichgültig, ob die Verbrauchsanzeige vollständig oder ob nur ein Teil der Verbrauchsanzeige erfasst wird. Der optische Sensor weist ein Blickfeld auf, das auf die Verbrauchsanzeige ausgerichtet ist. Der in dem Blickfeld befindliche Teil der Verbrauchsanzeige wird auf optischem Wege erfasst.

Der optische Sensor stellt an einem Ausgang ein Signal zur Verfügung, insbesondere ein elektrisches oder elektronisches Ausgangssignal. Das Signal wird zur Auswertung an eine Steuerung übermittelt. Die Auswertung richtet sich auf Veränderungen des Signals. Anders als bei den eingangs geschilderten Verfahren zur elektronischen Ablesung einer Verbrauchsanzeige wird also nicht eine Momentaufnahme der Verbrauchsanzeige ausgewertet, um einen Zählerstand elektronisch verfügbar zu machen, sondern es wird eine zeitliche Veränderung des Signals ausgewertet. Denkbar ist die Verwendung eines optischen Sensors, der unmittelbar auf Veränderungen in seinem Blickfeld reagiert. In diesem Fall kann die genannte Steuerung ein Teil des optischen Sensors sein und mit diesem eine Einheit bilden, die auf jede Bewegung im Blickfeld mit einem bestimmten Ausgangssignal reagiert. Alternativ kann die genannte Steuerung ein gesondertes Bauteil sein und zu zwei aufeinanderfolgenden Zeitpunkten von dem optischen Sensor übermittelte Signale miteinander vergleichen, um so eine Veränderung festzustellen. Hierzu ist keinerlei quantitative Auswertung der einzelnen Signale notwendig. Insbesondere ist nicht vorgesehen, mittels elektronischer Auswertung eines Signals, also aus einer Momentaufnahme, den Inhalt einer Verbrauchsanzeige verfügbar zu machen, wie etwa bei einer Texterkennung der in der Verbrauchsanzeige enthaltenen Ziffern.

In einem weiteren Verfahrensschritt wird ein Wasserschaden angezeigt, falls die Veränderungen ein vorgegebenes Wasserschadenkriterium erfüllen. Das Anzeigen eines Wasserschadens kann beispielsweise durch ein akustisches und/oder optisches Signal erfolgen, vergleichbar etwa mit einem Alarmsignal eines herkömmlichen Rauchmelders. Zum Anzeigen des Wasserschadens kann alternativ oder zusätzlich eine Benachrichtigung einer Person oder einer Zentrale vorgesehen sein.

Das Wasserschadenkriterium kann insbesondere in der angesprochenen Steuerung hinterlegt sein. Es ermöglicht eine eindeutige Entscheidung, ob eine auf Grundlage des Signals des optischen Sensors festgestellte Veränderung möglicherweise auf einen Wasserschaden zurückzuführen ist oder nicht. Insbesondere ist das Wasserschadenkriterium so gewählt, dass die in einem Überwachungszeitraum zu erwartenden Änderungen der Verbrauchsanzeige des Wasserzählers nicht mit Veränderungen des von dem optischen Sensor übermittelten Signals einhergehen, die das Wasserschadenkriterium erfüllen.

In einer Ausgestaltung wird beim Erfassen der Verbrauchsanzeige ein unmittelbar mit einem Flügelrad des Wasserzählers gekoppeltes Anzeigeelement von dem optischen Sensor erfasst. Das Anzeigeelement kann insbesondere mechanisch oder magnetisch mit dem Flügelrad gekoppelt sein. Die Kopplung ist unmittelbar, so dass sich das Anzeigeelement stets mit der gleichen Winkelgeschwindigkeit dreht wie das Flügelrad. Das Anzeigeelement kann insbesondere eine Kreisscheibe sein. Das weitere Anzeigeelement bewegt sich in der Regel relativ schnell und reagiert auf kleinere Durchflussmengen als eine gegebenenfalls zusätzlich vorhandene letzte Dezimalstelle der Verbrauchsanzeige. So kann beispielsweise eine sich drehende Kreisscheibe eine Vielzahl von Umdrehungen ausführen, bevor die Ziffer der letzten Dezimalstelle erstmals umspringt. Es können daher kleinste Veränderungen der Verbrauchsanzeige, die nicht notwendigerweise mit einem Umspringen einer Ziffer einer Dezimalstelle einhergehen, festgestellt werden. Beispielsweise kann ein Verlust von nur 500 ml, nur 200 ml oder sogar nur 50 ml Wasser als möglicher Wasserschaden erkannt werden, obwohl eine quantitative Messung derart kleiner Wassermengen mit dem Wasserzähler gar nicht vorgesehen ist.

In einer Ausgestaltung ist das Wasserschadenkriterium eine über einen vorgegebenen Zeitraum hinausgehende, fortwährende Veränderung des Signals. Grundsätzlich kann als Wasserschadenkriterium auch eine nur kurzzeitige oder einmalige Veränderung des Signals vorgegeben werden, so dass aus jeder Änderung der Verbrauchsanzeige, die mit einer Signaländerung des optischen Sensors verbunden ist, auf einen möglichen Wasserschaden geschlossen wird. Ein solches Wasserschadenkriterium eignet sich für Überwachungszeiträume, in denen voraussichtlich kein Wasser verbraucht werden wird, etwa während einer längeren Abwesenheit eines Benutzers, insbesondere im Urlaub. In Zeiten, in denen jedoch von Zeit zu Zeit Wasser verbraucht wird, ist ein solches Wasserschadenkriterium nicht geeignet. Stattdessen kann ein Zeitraum vorgegeben werden, der länger ist als die längste zu erwartende kontinuierliche Wasserentnahme. Dieser Zeitraum kann beispielsweise 10 Minuten, 15 Minuten, 20 Minuten, 30 Minuten oder mehr betragen. Diese Zeiträume sind länger als übliche Haushaltsgeräte wie Geschirrspülmaschinen oder Waschmaschinen kontinuierlich Wasser entnehmen oder als das Wasser üblicherweise beim Duschen laufen gelassen wird. Werden die genannten Zeiträume überschritten und ändert sich die Verbrauchsanzeige des Wasserzählers über einen längeren Zeitraum, ohne zwischenzeitlich wieder zum Stillstand zu kommen, liegt mit hoher Wahrscheinlichkeit ein Wasserschaden vor.

Es versteht sich, dass das Erfassen der Verbrauchsanzeige und das Auswerten der Veränderungen nur mit einer begrenzten zeitlichen Auflösung zu erfolgen braucht. Daher wird unter einer fortwährenden Veränderung des Signals nicht notwendigerweise eine im mathematischen Sinne kontinuierliche Signalveränderung verstanden, sondern lediglich eine mehrfache Signaländerung, zum Beispiel zwischen jedem beliebigen Auswertungszeitpunkt und einem darauffolgenden Auswertungszeitpunkt.

In einer Ausgestaltung erfasst der optische Sensor die Verbrauchsanzeige in einem vorgegebenen Zeittakt, in dem auch die Auswertung des zugehörigen Signals erfolgt. Insbesondere kann in jedem Zeittakt ein zugehöriges Signal an eine Steuerung übermittelt werden. Beispielsweise kann die Verbrauchsanzeige einmal pro Minute, alle 10 Sekunden, alle 5 Sekunden, einmal pro Sekunde oder mehrmals pro Sekunde, insbesondere im Bereich von ein- bis zehnmal pro Sekunde, mit dem optischen Sensor erfasst werden. In diesem Zeittakt kann ein Ausgangssignal des optischen Sensors abgetastet und das jeweils zugehörige Signal übermittelt werden. Ebenfalls möglich ist, dass der optische Sensor ein analoges, kontinuierlich über die Zeit veränderliches Ausgangssignal erzeugt, welches kontinuierlich an eine Steuerung übermittelt wird. In diesem Fall kann das an die Steuerung übermittelte Signal in dem genannten Zeittakt abgetastet und ausgewertet werden. Eine Veränderung des Signals wird durch einen Vergleich von Signalen, die aufeinanderfolgenden Zeittakten zugeordnet sind, festgestellt.

Es ist auch möglich, in jeden einzelnen Auswertungsschritt mehr als zwei Signale einzubeziehen. Die mehr als zwei Signale können aufeinanderfolgenden Zeittakten zugeordnet sein. Es kann insbesondere nur dann eine relevante Veränderung festgestellt werden, wenn eine vorgegebene Teilmenge einer vorgegebenen Anzahl von nacheinander übermittelten Signalen voneinander oder von einem bestimmten der in der Folge übermittelten Signale abweichende Signale enthält. Beispielsweise kann der optische Sensor die Verbrauchsanzeige mit einer Zeitauflösung von 3 pro Sekunde erfassen und in diesem Zeittakt jeweils zugehörige Signale an eine Steuerung übermitteln. Auf diese Weise können beispielsweise 30 aufeinanderfolgende Signale übermittelt und in die Auswertung einbezogen werden. Jedes der Signale wird mit einem der Signale, insbesondere mit dem in der Folge der 30 Signale zuerst übermittelten Signal, verglichen. Weichen aus der Folge der 30 Signale beispielsweise mehr als 10 oder mehr als 20 von dem ersten Signal ab, wird eine Veränderung festgestellt und gegebenenfalls ein entsprechendes Wasserschadenkriterium als erfüllt angesehen, so dass ein Wasserschaden angezeigt wird. Durch das Auswerten einer längeren Folge von Signalen können Änderungen der Verbrauchsanzeige zuverlässiger festgestellt werden, als wenn jeweils nur zwei Signale miteinander verglichen werden. Wird beispielsweise eine sich drehende Kreisscheibe von dem optischen Sensor erfasst, kann es auch bei Verwendung eines längeren Zeittakts passieren, dass sich die Kreisscheibe zu zwei aufeinanderfolgenden Zeitpunkten jeweils in der gleichen Stellung befindet und sich die zugehörigen Signale nicht oder nur unwesentlich voneinander unterscheiden.

In einer Ausgestaltung ist der optische Sensor eine Kamera und das übermittelte Signal umfasst Bilddaten. Die Bilddaten können in analoger oder digitaler Form in dem Signal enthalten sein. Die Kamera kann beispielsweise eine CCD-Kamera mit gegebenenfalls nur geringer optischer Auflösung sein. Das Auswerten von Veränderungen des von der Kamera übermittelten Signals kann einen Vergleich einzelner Bildpunkte oder Bildbereiche von zeitlich aufeinanderfolgenden Signalen einschließen. Nicht vorgesehen ist, einzelne Bilddaten, die einer Momentaufnahme der Verbrauchsanzeige entsprechen, auszuwerten, insbesondere nicht durch eine Texterkennung. Es sind nicht die Inhalte des Bildes für die Auswertung von Interesse, sondern lediglich Signaländerungen, die auf eine Bewegung der Verbrauchsanzeige zurückzuführen sind. Eine solche Auswertung von mit einer Kamera erfassten Bilddaten ist einfach möglich und kann auch auf geringfügige Änderungen der Verbrauchsanzeige, die nur einen kleinen Bildbereich betreffen, ansprechen, so dass der optische Sensor mit einem relativ großen Blickfeld ausgestattet werden kann. Es ist dann ausreichend, wenn ein sich ändernder Teil der Verbrauchsanzeige innerhalb dieses Blickfelds liegt. Eine genaue Justierung des optischen Sensors auf ein bestimmtes Element der Verbrauchsanzeige ist hingegen nicht notwendig.

In einer Ausgestaltung wird zwischen mehreren Betriebsarten umgeschaltet, in denen unterschiedliche Wasserschadenkriterien angewendet werden. Beispielsweise kann in einer ersten Betriebsart ein Wasserschadenkriterium vorgegeben sein, das auf jedwede Veränderung der Verbrauchsanzeige bzw. des Signals des optischen Sensors anspricht, wie vorstehend im Zusammenhang mit beispielsweise urlaubsbedingter Abwesenheit eines Benutzers erläutert. In einer anderen Betriebsart kann das Wasserschadenkriterium nur bei einer fortwährenden Veränderung über einen vorgegebenen Zeitraum hinaus erfüllt werden. Das Umschalten zwischen derartigen Betriebsarten ermöglicht gleichermaßen eine besonders empfindliche Erkennung von Wasserschäden als auch eine Vermeidung von Fehlalarmen in Zeiten normalen Wasserverbrauchs.

In einer Ausgestaltung umfasst das Anzeigen eines Wasserschadens ein Versenden einer Text- und/oder Sprachnachricht über ein Mobilfunknetz. Natürlich können entsprechende Benachrichtigungen auch über ein Telefonfestnetz oder ein sonstiges Datennetz versendet werden, etwa per E-Mail. Eine Benachrichtigung mittels SMS oder einer gesprochenen Ansage über ein Mobilfunknetz kommt in der Regel besonders zeitnah bei der zu benachrichtigenden Person an, auch wenn diese gerade unterwegs ist.

In einer Ausgestaltung wird das Versenden der Text- und/oder Sprachnachricht so lange wiederholt, bis ein Rückstellknopf betätigt wird. Das wiederholte Versenden kann in einem vorgegebenen Zeittakt erfolgen. Der Rückstellknopf kann sich insbesondere an einer Vorrichtung zum Erkennen eines Wasserschadens, die an dem Wasserzähler angeordnet ist, befinden. Der Benutzer wird also so lange fortlaufend benachrichtigt, bis er den möglichen Schadensort aufsucht und auf einen Wasserschaden hin überprüft. Die Benachrichtigungen können beispielsweise in einem Zeittakt von einer Minute oder 5 Minuten erfolgen. Dies zwingt den Benutzer dazu, den möglichen Schadensort unverzüglich aufzusuchen.

In einer Ausgestaltung wird zum Erfassen der Verbrauchsanzeige ein Gehäuse, in dem der optische Sensor angeordnet ist, an ein Sichtfenster des Wasserzählers angesetzt und in einer Stellung befestigt, in der der optische Sensor auf die Verbrauchsanzeige gerichtet ist. Das Befestigen des optischen Sensors kann beispielsweise mit einer an dem Gehäuse ausgebildeten Befestigungseinrichtung erfolgen, etwa einem Spanngurt oder Gummiband, das um den Wasserzähler herumgeführt wird. Auf diese Weise ist eine einfache Befestigung an jedem gebräuchlichen Wasserzähler möglich. Auch die eingangs genannte Steuerung kann in dem Gehäuse angeordnet sein. Der optische Sensor wird auf die Verbrauchsanzeige gerichtet, so dass das von dem optischen Sensor übermittelte Signal auf Veränderungen der Verbrauchsanzeige reagiert. Hierzu kann der optische Sensor insbesondere auf das sich am schnellsten bewegende Element der Verbrauchsanzeige gerichtet werden, beispielsweise auf eine Zeiger- oder Ziffernanzeige der letzten Nachkommastelle oder auf ein zusätzlich zu den Zeigern oder Ziffern vorgesehenes Zählrad, beispielsweise in Form einer sich drehenden Kreisscheibe. Herkömmliche Wasserzähler weisen häufig ein solches sich schnell bewegendes Element auf, das mechanisch oder magnetisch unmittelbar an ein Flügelrad des Wasserzählers gekoppelt sein kann. Dieses Anzeigeelement reagiert besonders empfindlich auf den Wasserverbrauch, so dass auch kleinste Leckagen, etwa vergleichbar mit einem tropfenden Wasserhahn, als mögliche Wasserschäden erkannt werden können.

In einer Ausgestaltung wird ein Zeitpunkt der Anzeige eines Wasserschadens gespeichert. Hierzu weist die genannte Steuerung eine Uhr auf und einen Speicher, in dem die betreffende Uhrzeit gespeichert wird. Auf diese Weise kann nachvollzogen werden, wann erstmals ein Wasserschaden angezeigt wurde.

Die oben genannte Aufgabe wird ebenfalls gelöst durch die Vorrichtung zur Erkennung eines Wasserschadens mit den Merkmalen des Anspruchs 10. Vorteilhafte Ausgestaltungen sind in den sich anschließenden Unteransprüchen angegeben.

Die Vorrichtung dient zur Erkennung eines Wasserschadens und hat
● eine Anzeigeeinrichtung zur Anzeige eines Wasserschadens,
● eine Steuerung, die dazu ausgebildet ist, Informationen eines Wasserzählers auszuwerten und die Anzeigeeinrichtung anzusteuern, falls ein vorgegebenes Wasserschadenkriterium erfüllt ist,
● ein Gehäuse zur Anordnung an dem Wasserzähler und einen optischen Sensor zur Erfassung einer Verbrauchsanzeige des Wasserzählers, wobei
● die Steuerung dazu ausgebildet ist, Veränderungen eines von dem optischen Sensor übermittelten Signals auszuwerten und die Anzeigeeinrichtung zu aktivieren, falls die Veränderungen ein Wasserschadenkriterium erfüllen.

Die Vorrichtung ist insbesondere zur Ausführung des vorstehend erläuterten Verfahrens bestimmt. Zur Erläuterung der Merkmale und Vorteile der Vorrichtung wird auf die vorstehenden Ausführungen verwiesen, die entsprechend gelten. Damit, dass die Steuerung dazu ausgebildet ist, Informationen eines Wasserzählers auszuwerten, ist lediglich gemeint, dass sie mit einem Wasserzähler zusammenwirkt. Mit den Informationen sind die mit dem optischen Sensor erzeugten Signale gemeint. Es ist nicht notwendig und bei der Erfindung auch nicht vorgesehen, einen Zählerstand auszuwerten.

Die Steuerung kann einen programmierbaren Mikroprozessor und einen elektronischen Speicher aufweisen. In dem Speicher kann das vorgegebene Wasserschadenkriterium hinterlegt sein. Die Steuerung, der optische Sensor und/oder die Anzeigeeinrichtung können in dem Gehäuse angeordnet sein. Die Vorrichtung kann außerdem eine Befestigungseinrichtung zur Fixierung der Vorrichtung an dem Wasserzähler in einer vorgegebenen Anordnung aufweisen.

In einer Ausgestaltung ist der optische Sensor eine Kamera. Hierzu wird auf die vorstehenden Erläuterungen des Verfahrens verwiesen.

In einer Ausgestaltung ist die Anzeigeeinrichtung ein Mobilfunkmodul mit einer Aufnahme für eine SIM-Karte. Das Anzeigen eines Wasserschadens kann dann durch Versenden einer Text- und/oder Sprachnachricht über ein Mobilfunknetz erfolgen. Alternativ oder zusätzlich kann die Anzeigeeinrichtung eine optische und/oder akustische Anzeige aufweisen. Durch die Verwendung einer SIM-Karte kann der Vorrichtung eine Rufnummer des verwendeten Mobilfunknetzes zugeordnet werden, so dass die Kommunikation mit weiteren Netzteilnehmern, insbesondere mit einem Mobiltelefon eines Benutzers, problemlos möglich ist.

In einer Ausgestaltung ist die Steuerung über eine an das Mobilfunkmodul gesendete SMS programmierbar. Beispielsweise kann eine SMS an das Mobilfunkmodul gesendet werden, die eine zu benachrichtigende Rufnummer enthält. Diese wird in der Steuerung und/oder einem zugehörigen Speicher der Vorrichtung hinterlegt, so dass im Falle eines Wasserschadens eine entsprechende Benachrichtigung erfolgt. Durch die Programmierung per SMS benötigt die Vorrichtung keine weitere, für eine derartige Programmierung geeignete Schnittstelle. Alternativ kann die Vorrichtung über ein Datenkabel zwecks Programmierung an einen Computer oder an ein Computernetzwerk angeschlossen werden.

In einer Ausgestaltung weist das Gehäuse einen Träger auf, an dem der optische Sensor befestigt ist, und eine Öffnung, mit der das Gehäuse an ein Sichtfenster des Wasserzählers ansetzbar ist, so dass der optische Sensor einen vorgegebenen Abstand zu dem Sichtfenster aufweist. Der vorgegebene Abstand ist so auf den optischen Sensor und die Anordnung der Verbrauchsanzeige bei gebräuchlichen Wasserzählern relativ zu deren Sichtfenster abgestimmt, dass der optische Sensor die Verbrauchsanzeige einwandfrei erfassen kann. Ist der optische Sensor eine Kamera, kann insbesondere eine Schärfenebene in einem vorgegebenen Abstand vor der Öffnung des Gehäuses angeordnet werden.

In einer Ausgestaltung weist die Vorrichtung eine Lichtquelle auf, die die Verbrauchsanzeige des Wasserzählers beleuchtet, wenn die Vorrichtung an dem Wasserzähler angeordnet ist. Die Lichtquelle kann zum Beispiel eine Glühlampe oder eine LED sein. Sie kann im Betrieb der Vorrichtung ständig eingeschaltet sein oder nur jeweils kurzzeitig, abgestimmt auf Zeitpunkte, in denen der optische Sensor die Verbrauchsanzeige erfassen soll. Es können auch zwei oder mehr Lichtquellen vorhanden sein, um die Beleuchtung der Verbrauchsanzeige ausfallsicherer oder gleichmäßiger zu gestalten.

Die Erfindung wird nachfolgend anhand eines in Figuren dargestellten Ausführungsbeispiels näher erläutert. Es zeigen:
- Fig. 1: eine erfindungsgemäße Vorrichtung zur Erkennung eines Wasserschadens an einem Wasserzähler in einer vereinfachten, schematischen Darstellung,
- Fig. 2: die Vorrichtung zur Erkennung eines Wasserschadens aus Figur 1 in einer schematischen Darstellung von unten, und
- Fig. 3: die Vorrichtung zur Erkennung eines Wasserschadens aus Figur 1 in einer schematischen Darstellung von oben.

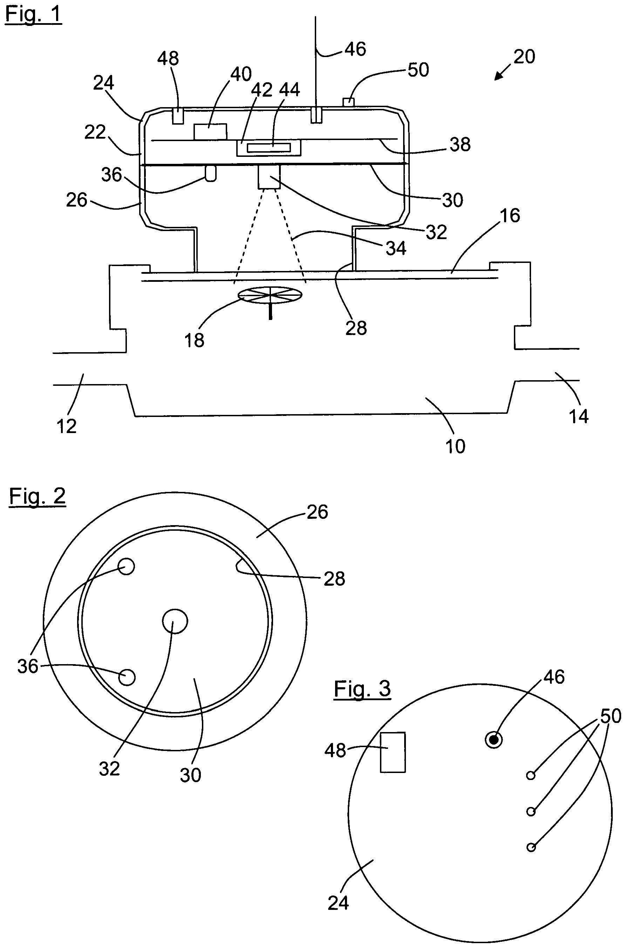

Im unteren Teil der Figur 1 ist ein herkömmlicher Wasserzähler 10 dargestellt, der einen Wassereinlass 12 und einen Wasserauslass 14 aufweist. Der Wasserzähler 10 ist in eine zentrale Kaltwasserleitung eingefügt, so dass jeglicher Wasserverbrauch von dem Wasserzähler 10 erfasst wird. Der Wasserzähler 10 weist ein Sichtfenster 16 auf, hinter dem eine Verbrauchsanzeige angeordnet ist. Die Verbrauchsanzeige umfasst als sich am schnellsten bewegendes Element eine drehbar gelagerte Kreisscheibe 18, die mit radial verlaufenden Linien versehen ist. Die Kreisscheibe 18 ist über eine nicht dargestellte Magnetkupplung an ein ebenfalls nicht dargestelltes Flügelrad des Wasserzählers 10 gekoppelt, so dass sie in eine relativ schnelle Drehung versetzt wird, sobald Wasser durch den Wasserzähler 10 hindurchströmt.

An dem Wasserzähler 10 ist eine Vorrichtung 20 zur Erkennung eines Wasserschadens angeordnet. Die Vorrichtung 20 weist ein Gehäuse 22 auf, das aus einem oberen Gehäuseteil 24 und einem unteren Gehäuseteil 26 zusammengefügt ist. Das Gehäuse 22 ist im Querschnitt kreisrund mit einem Außendurchmesser im Bereich von etwa 60 mm bis etwa 100 mm. Die Gesamthöhe des Gehäuses 22 liegt im Bereich von ungefähr 20 mm bis ungefähr 60 mm. Das obere Gehäuseteil 24 bildet einen oben geschlossenen Deckel, der sich über etwas weniger als die Hälfte der Gesamthöhe des Gehäuses 22 erstreckt. Das untere Gehäuseteil 26 hat einen oberen, zylindrischen Abschnitt, dessen Durchmesser dem Durchmesser des oberen Gehäuseteils 24 entspricht. Unterhalb davon weist das untere Gehäuseteil 26 einen ebenfalls zylindrischen Abschnitt mit einem geringeren Durchmesser im Bereich von ungefähr 30 mm bis ungefähr 50 mm auf. Dieser untere zylindrische Abschnitt ist unten offen und bildet eine Öffnung 28, mit der das Gehäuse 22 an das Sichtfenster 16 des Wasserzählers 10 angesetzt ist. Das Gehäuse 22 ist so an das Sichtfenster 16 des Wasserzählers 10 angesetzt, dass sich die Öffnung 28 im Bereich der Verbrauchsanzeige, insbesondere der Kreisscheibe 18, befindet.

Parallel zum Rand der Öffnung 28 weist das Gehäuse 22 einen kreisscheibenförmigen Träger 30 auf, der klemmend zwischen dem unteren Gehäuseteil 26 und dem oberen Gehäuseteil 24 gehalten ist. An der Unterseite des Trägers 30, d.h. an dessen der Öffnung 28 zugewandter Seite, ist ein optischer Sensor 32 angeordnet. Der optische Sensor 32 hat ein durch gestrichelte Linien angedeutetes Blickfeld 34, das auf die Kreisscheibe 18 ausgerichtet ist. Außerdem sind an der Unterseite des Trägers 30 zwei Lichtquellen 36 in Form von LEDs angeordnet, wobei in der Figur 1 nur eine dieser Lichtquellen 36 sichtbar ist. Die Lichtquellen 36 können ständig eingeschaltet sein oder immer nur dann, wenn die Verbrauchsanzeige 18 von dem optischen Sensor 32 erfasst werden soll.

Oberhalb des Trägers 30, etwa in der Mitte des oberen Gehäuseteils 24, ist eine Leiterplatte 38 angeordnet. Diese ist über nicht dargestellte Abstandshalter mit dem Träger 30 verbunden. Auf der Leiterplatte 38 ist eine Steuerung 40 in Form eines programmierbaren Mikroprozessors angeordnet, außerdem ein Mobilfunkmodul 42, das eine Aufnahme 44 für eine SIM-Karte aufweist. Die Steuerung 40 ist über nicht dargestellte elektrische Leitungen mit dem Mobilfunkmodul 42, dem optischen Sensor 32 und der Lichtquelle 36 verbunden.

Am oberen Gehäuseteil 24 ist eine Steckbuchse 48 zum Anschließen einer externen Stromversorgung sowie eine steckbare Antenne 46, die mit dem Mobilfunkmodul 42 verbunden ist, angeordnet. Außerdem gibt es drei am oberen Gehäusteil 24 angeordnete Kontrollleuchten 50, von denen in der Figur 1 nur eine sichtbar ist. Diese sind ebenfalls mit der Steuerung 40 verbunden.

In der Figur 2 ist der Blick von unten auf die Vorrichtung 20 gerichtet. Erkennbar ist das untere Gehäuseteil 26 mit der kreisrunden Öffnung 28, deren Öffnungsdurchmesser kleiner ist als der Außendurchmesser des oberen zylindrischen Abschnitts des unteren Gehäuseteils 26. Durch die Öffnung hindurch sichtbar ist der Träger 30, in dessen Mitte konzentrisch zu der Öffnung 28 der optische Sensor 32 angeordnet ist. In einem radialen Abstand von dem optischen Sensor 32 und nahe dem Öffnungsrand 28 sind die beiden Lichtquellen 36 angeordnet. Die beiden Lichtquellen 36 bilden gemeinsam mit dem optischen Sensor 32 etwa einen rechten Winkel, so dass sie das Blickfeld 34 des optischen Sensors 32 beide von einer Seite aus beleuchten.

Figur 3 zeigt einen Blick von oben auf die Vorrichtung 20, so dass im Wesentlichen das obere Gehäuseteil 24 sichtbar ist. Man erkennt die Anordnung der Steckbuchse 48 für die Stromversorgung sowie die weitere Buchse für die Antenne 46. Außerdem sind die drei Kontrollleuchten 50 gezeigt, die in einer Reihe angeordnet sind.

## Patentansprüche

1. Verfahren zur Erkennung eines Wasserschadens mit den folgenden Schritten:
● Erfassen einer Verbrauchsanzeige eines Wasserzählers (10) mit einem optischen Sensor (32),
● Auswerten von Veränderungen eines von dem optischen Sensor (32) übermittelten Signals,
● Anzeigen eines Wasserschadens, falls die Veränderungen ein vorgegebenes Wasserschadenkriterium erfüllen.

2. Verfahren nach Anspruch 1, **dadurch gekennzeichnet, dass** beim Erfassen der Verbrauchsanzeige ein unmittelbar mit einem Flügelrad des Wasserzählers gekoppeltes Anzeigeelement von dem optischen Sensor erfasst wird.

3. Verfahren nach Anspruch 1 oder 2, **dadurch gekennzeichnet, dass** das Wasserschadenkriterium eine über einen vorgegebenen Zeitraum hinausgehende, fortwährende Veränderung des Signals ist.

4. Verfahren nach einem der Ansprüche 1 bis 3, **dadurch gekennzeichnet, dass** der optische Sensor (32) die Verbrauchsanzeige in einem vorgegebenen Zeittakt erfasst, in dem auch die Auswertung des zugehörigen Signals erfolgt.

5. Verfahren nach einem der Ansprüche 1 bis 4, **dadurch gekennzeichnet, dass** der optische Sensor (32) eine Kamera ist und das übermittelte Signal Bilddaten umfasst.

6. Verfahren nach einem der Ansprüche 1 bis 5, **dadurch gekennzeichnet, dass** zwischen mehreren Betriebsarten umgeschaltet wird, in denen unterschiedliche Wasserschadenkriterien angewendet werden.

7. Verfahren nach einem der Ansprüche 1 bis 6, **dadurch gekennzeichnet, dass** das Anzeigen eines Wasserschadens ein Versenden einer Text- und/oder Sprachnachricht über ein Mobilfunknetz umfasst, wobei das Versenden der Text- und/oder Sprachnachricht insbesondere solange wiederholt wird, bis ein Rückstellknopf betätigt wird.

8. Verfahren nach einem der Ansprüche 1 bis 7, **dadurch gekennzeichnet, dass** zum Erfassen der Verbrauchsanzeige ein Gehäuse (22), in dem der optische Sensor (32) angeordnet ist, an ein Sichtfenster (16) des Wasserzählers (10) angesetzt und in einer Stellung befestigt wird, in der der optische Sensor (32) auf die Verbrauchsanzeige gerichtet ist.

9. Verfahren nach einem der Ansprüche 1 bis 8, **dadurch gekennzeichnet, dass** der Zeitpunkt der Anzeige eines Wasserschadens gespeichert wird.

10. Vorrichtung (20) zur Erkennung eines Wasserschadens mit
● einer Anzeigeeinrichtung zur Anzeige eines Wasserschadens und
● einer Steuerung (40), die dazu ausgebildet ist, Informationen eines Wasserzählers (10) auszuwerten und die Anzeigeeinrichtung anzusteuern, falls ein vorgegebenes Wasserschadenkriterium erfüllt ist, **dadurch gekennzeichnet, dass**
● die Vorrichtung ein Gehäuse (22) zur Anordnung an dem Wasserzähler (10) und einen optischen Sensor (32) zur Erfassung einer Verbrauchsanzeige des Wasserzählers (10) aufweist, wobei
● die Steuerung (40) dazu ausgebildet ist, Veränderungen eines von dem optischen Sensor (32) übermittelten Signals auszuwerten und die Anzeigeeinrichtung zu aktivieren, falls die Veränderungen ein vorgegebenes Wasserschadenkriterium erfüllen.

11. Vorrichtung nach Anspruch 10, **dadurch gekennzeichnet, dass** der optische Sensor (32) eine Kamera ist.

12. Vorrichtung nach Anspruch 10 oder 11, **dadurch gekennzeichnet, dass** die Anzeigeeinrichtung ein Mobilfunkmodul (42) mit einer Aufnahme (44) für eine SIM-Karte aufweist.

13. Vorrichtung nach Anspruch 12 **dadurch gekennzeichnet, dass** die Steuerung (40) über eine an das Mobilfunkmodul (44) gesendete SMS programmierbar ist.

14. Vorrichtung nach einem der Ansprüche 10 bis 13, **dadurch gekennzeichnet, dass** das Gehäuse (22) einen Träger (30) aufweist, an dem der optische Sensor (32) befestigt ist, und eine Öffnung (28), mit der das Gehäuse (22) an ein Sichtfenster (16) des Wasserzählers ansetzbar ist, so dass der optische Sensor (32) einen vorgegebenen Abstand zu dem Sichtfenster (16) aufweist.

15. Vorrichtung nach einem der Ansprüche 10 bis 14, **dadurch gekennzeichnet, dass** die Vorrichtung (20) eine Lichtquelle (36) aufweist, die die Verbrauchsanzeige des Wasserzählers (10) beleuchtet, wenn die Vorrichtung (22) an dem Wasserzähler (10) angeordnet ist.
